# EUROPEAN PATENT SPECIFICATION

(11) **EP 3 530 111 B1**
(45) Date of publication and mention of the grant of the patent: **12.05.2021**
(21) Application number: 18157795.8
(22) Date of filing: 21.02.2018
(51) Int. Cl.: A01K 1/04

(54) **PET SECURING DEVICE**
HAUSTIERSICHERUNGSVORRICHTUNG
DISPOSITIF DE SÉCURISATION D'ANIMAUX DE COMPAGNIE

(43) Date of publication of application: 28.08.2019
(73) Proprietor: Sharp, Adam, Ponterfract, West Yorkshire WF7 3QU (GB); Mcleod, Kevin, Leeds, West Yorkshire LS18 5SL (GB)
(72) Inventor: Sharp, Adam, Ponterfract, West Yorkshire WF7 3QU (GB); Mcleod, Kevin, Leeds, West Yorkshire LS18 5SL (GB)
(74) Representative: Appleyard Lees IP LLP

(56) References cited:
- US-A- 227 675
- US-A- 4 197 818
- US-A- 4 796 566
- US-A1- 2012 285 396
- US-A1- 2017 079 239
- US-B1- 6 820 573

## Description

The present invention is related to a device for securing a pet, and in particular to a holder for retaining a pet lead.

Pet leads are typically used to secure dogs, for example when an owner takes a dog for a walk. However, pet leads can also be used for other animals, when an owner wishes to prevent the animal from straying.

There are two conventional types of pet leads. The first is a length of leash, typically leather or nylon, which is attachable at a first end to a collar of a pet, and comprises a loop at a second end to be held by an owner. The second type of conventional pet lead is a retractable pet lead. A retractable pet lead comprises a handle for a user to grip, and a housing in which a length of tape is retractable. An end of the tape typically comprises a fastening means to attach to a collar of a pet, whilst the other end is fixed inside the housing. The retractable lead comprises a biasing mechanism such that the tape is automatically retracted into the housing when the end of the tape is released. Retractable leads are often preferred, because the tape remains taut when the pet is moving towards or away from the owner, so that tangling of the lead is avoided.

Pet owners typically require a means to secure their pet that does not require them to hold onto the lead at all times, for example to be used when at a picnic, or when camping, or if the owner keeps their pet outside in an unsecured garden. A conventional device for securing a pet is a cork-screw style stake that can be inserted into the ground in a twisting motion and that comprises a loop on its end for tying a length of cable. The other end of the cable is secured to the pet, thereby allowing the pet to move around the stake in an area defined by the length of the cable. However, these devices are not suitable for use with conventional pet leads. Furthermore, disadvantages arise in these devices in that it is time consuming to attach the cable to the stake, and the cable can easily be tangle.

US6820573B1 discloses a rotating apparatus for securing a pet leash; US4197818A and US227675 A disclose stakes to which a pet leash can be tethered; US 2017/079239 A1 discloses a tie-out post having a detachable and rotatable connection point; US4796566A1 discloses a convertible tethering system.

According to the present invention, there is provided a pet securing device according to claim 1 and kit of parts as set forth in claim 10. Other features of the invention will be apparent from the dependent claims, and the description which follows.

According to a first aspect of the invention there is provided a pet securing device as defined in claim 1.

The feature of the holder being rotatable relative to the post is advantageous because it allows the pet to roam around the post without a tape of the lead winding or tangling around the post. The feature of the holder for receiving the pet lead provides the advantage that the user may secure their pet with the pet securing device using their usual pet lead, rather than requiring a specialised cable for securing their pet.

The tape of the lead may be a cord, string or rope.

The holder may preferably be adapted to receive a retractable dog lead. This is advantageous because, when in use, the tape may be retracted and extended from the housing when the pet moves towards and away from the securing device, thereby preventing the tape from being loose and becoming tangled.

The holder comprises an opening for receiving a housing of a retractable pet lead. The holder may comprise substantially planar front and rear walls. The holder comprises curved left and right side walls. The holder may be adapted to receive conventional retractable pet leads. The holder may be a universal holder. The holder may thereby be adapted to receive retractable pet leads of a variety of different shapes and sizes.

The length of the left side wall is longer than the length of the right side wall, or alternatively, the length of the left side wall is shorter than the length of the right side wall. This may provide the advantage that retractable pet leads of different shapes and sizes may be insertable into the holder, in different orientations. For example, the holder may be adapted to receive a larger retractable pet lead, where the pet lead is in a first orientation, and may be adapted to receive a smaller retractable pet lead, wherein the pet lead is provided in a different orientation relative to the holder.

The holder comprises a slot for a tape of a lead to extend from the interior of the holder. A slot is provided in the left side wall and the right side wall. The slots extend from a top end of the side wall towards a base of the holder. In use, when a retractable lead is inserted into the holder, the tape may extend through the slot. A slot being provided in each of the left side wall and the right side wall provides the advantage that different types of retractable leads may be inserted in the holder. For example, a first type of retractable lead may be shaped such that when inserted into the holder, the tape extends through the slot in the left side wall, whereas a second type of retractable lead may be shaped such that when inserted into the holder, the tape extends through the slot in the right side wall. The feature of the slot extending from the top end of the side wall towards the base of the holder provides the advantage that the holder is suitable for use with different types of lead, wherein the tape extends from different areas of the housing.

The holder may comprise means for securing the pet lead in the holder. The means for securing the pet lead in the holder may be a strap. The strap may be flexible. The holder may comprise a release mechanism for releasing the strap. This may allow a user to quickly remove the pet lead from the holder. The strap may comprise a catch provided at an end of the strap, which may be releasably receivable in a strap retaining means on the holder. The catch may comprise two resilient members. The resilient members may be receivable in an aperture of the strap retaining means. The resilient members may be biased apart from each other, thereby securing the strap in the aperture of the strap retaining means. In use, a user may press the resilient members together to release the strap from the release point.

The strap may be adjustable. This provides the advantage that the user may adjust the length of the strap to secure pet leads of different sizes. The strap may comprise a plurality of projections that may engage a complementary projection on an adjustment retainer on a wall of the holder. The adjustment retainer may comprise an opening through which the second end of the strap may be received. The user may tighten the strap by pulling the second end of the strap, so that the projection on the adjustment retainer engages a projection of the strap. The engagement of the projection on the strap and the projection on the adjustment retainer may secure the strap. The projections on the strap may be sloping projections, so that when the projections on the strap engage the projection on the adjustment retainer, the strap may be pulled through the opening in the adjustment retainer in a first direction to tighten the strap, but may not be pulled in a second direction, opposite to the first direction, to loosen the strap.

The adjustment retainer may be provided on one of the front wall or the rear wall of the holder, and the strap retaining means may be provided on the other of the front wall or the rear wall of the holder. The strap may extend from the strap retaining means, over the top of the holder, to the adjustment retainer. In use, when a retractable lead is provided in the holder, the strap may extend from the strap retaining means, through a space in the retractable lead, and into the adjustment retainer. The space in the retractable lead may be the space between the handle and the housing, which is common in conventional retractable leads.

The holder may comprise at least one cut-out portion at a top end of front wall and/or the rear wall. The at least one cut-out portion may extend from the top end of the front wall and/or rear wall towards the base of the holder. The at least one cut out portion may be adapted to receive the strap, and may therefore allow the strap to be further tightened. This provides the advantage that the holder may be used with smaller leads, wherein the space between the handle and the housing of the lead does not project above the top end of the holder.

The post may comprise a spike and a head. The spike may be insertable into the ground, and the head may be provided at an end of the spike and may sit above the ground when the post is inserted into the ground.

The holder may be releasably attachable to the post. The holder may comprise a connecting portion for connecting the holder to the post. The connecting portion may be provided at the base of the holder and may fit over the head of the post. The holder may comprise securing means for releasably securing the holder to the post.

The securing means may be a securing clip. The securing clip may be provided on a side of the connecting portion and may comprise a projecting flange. The projecting flange may be insertable into an annular groove in the head of the post. The securing clip may comprise an actuator, for releasing the flange from the annular groove, so that the holder may be removed from the head. The flange many be movable around the annular groove. This provides the advantage that the holder may freely rotate around the post, while remaining secured to the post.

According to a second aspect of the invention there is provided a kit of parts as defined in claim 10.

The holder may comprise any of the features descripted above in relation to the first aspect of the invention. The at least one post may comprise any of the features described above in relation to the first aspect of the invention.

The kit of parts may further comprise a first post and a second post, wherein the length of the second post may be shorter or longer than the first post. The holder may be releasably attachable to each of the first post and the second post. The longer of the first and second posts may be suitable for use in soft ground, and the shorter of the first and second posts may be suitable for use in firm ground. This provides the advantage that the pet securing device may be used in both soft ground and firm ground.

The kit of parts may further comprise a cap. The cap may be releasably attachable to the head of the post. The cap may be substantially cylindrical, and may fit over the head of the post. The cap may comprise a surface to which a force may be applied, to insert the post into the ground. This improves user convenience because it provides a simple means for inserting the post into the ground.

The kit of parts may further comprise a withdrawal handle. The withdrawal handle may comprise a gripping portion, which may be adapted to be gripped by a user. The withdrawal handle may comprise an attaching portion, for releasably attaching to the head of the post. The attaching portion may comprise a lip that may be receivable in the slot in the head. The attaching portion may be substantially semi-cylindrical, and the lip may also be semi-cylindrical and may project inwards. The lip may be receivable in the annular slot in the head. In use, the handle may be attached to the head of the post, and a user may pull on the gripping portion to withdraw the post from the ground. This is advantageous in that it is easy for the user to withdraw the post from the ground by pulling on the gripping portion.

According to a third aspect not according to the present invention there is provided an insertion tool for a pet securing device, the insertion tool comprising a cap that is attachable to a head of a post of the pet securing device, the cap comprising a surface to which a force may be applied, to insert the post into the ground.

According to a fourth aspect not according to the present invention there is provided a withdrawal tool for a pet securing device, the withdrawal tool comprising a handle that is attachable to a head of a post of the pet securing device, the handle comprising a gripping portion to be gripped by a user and an attaching portion for attaching to the head of the post. A force may be applied to the gripping portion to withdraw the post from the ground.

For a better understanding of the invention, and to show how embodiments of the same may be carried into effect, reference will now be made, by way of example, to the accompanying diagrammatic drawings, in which:
Figure 1 shows a front plan view of a pet securing device according to an example of the invention;
Figure 2 shows a perspective view of the pet securing device;
Figure 3 shows an exploded rear plan view of the holder of the pet securing device;
Figure 4 shows a top perspective view of the holder;
Figure 5 shows a side view of the holder;
Figure 6 shows a perspective view of the strap for the holder;
Figure 7 shows a perspective view of the post of the pet securing device;
Figure 8 shows a side plan view of the post;
Figure 9 shows a side plan view of a second example of a post for the pet securing device;
Figure 10 shows a perspective view of the post cap for a kit of parts; and
Figure 11 shows a perspective view of the post handle for the kit of parts.

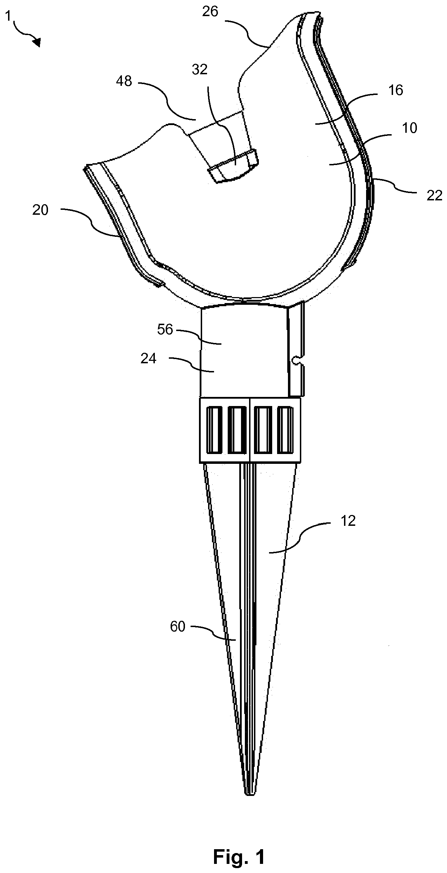

A pet securing device 1 comprises a holder 10 for retaining a retractable pet lead and a post 12 for inserting into the ground, as shown in figure 1.

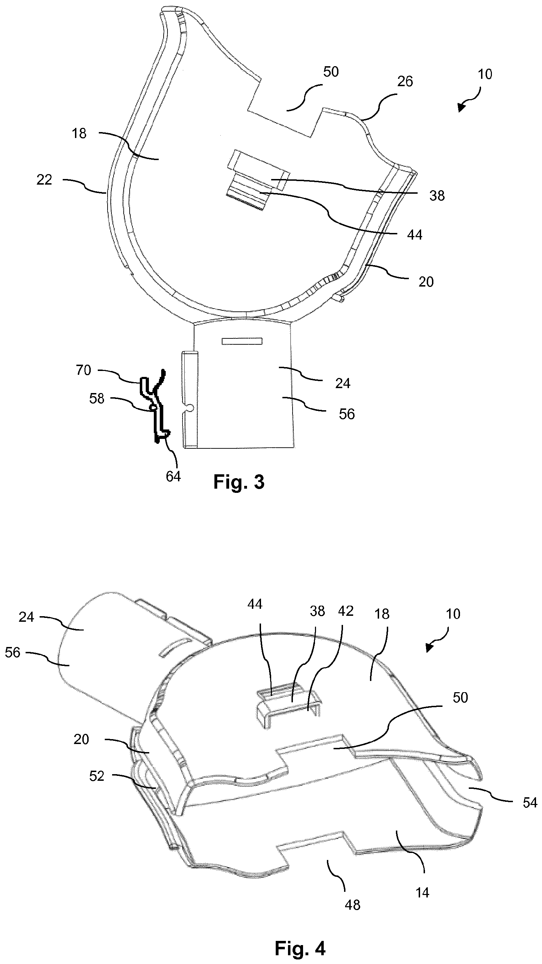

The holder 10, shown in isolation in figures 3 to 5, comprises an opening 14 for receiving a retractable pet lead. The holder 10 comprises substantially planar front and rear walls 16, 18, and curved side walls 20, 22. The holder 10 is adapted to receive any conventional retractable lead that comprise planar front and rear walls and curved side walls. The side walls 20, 22 and front and rear walls 16, 18 extend up from the base 24 of the holder 10, and act to securely hold a lead in place. In use, a user inserts a retractable lead into the opening 14 in the holder, such that the handle portion of the retractable lead extends above the top 26 of the holder.

The left side wall 20 is shorter than the right side wall 22. This may allow a retractable dog lead to be provided in a first orientation or a second orientation.

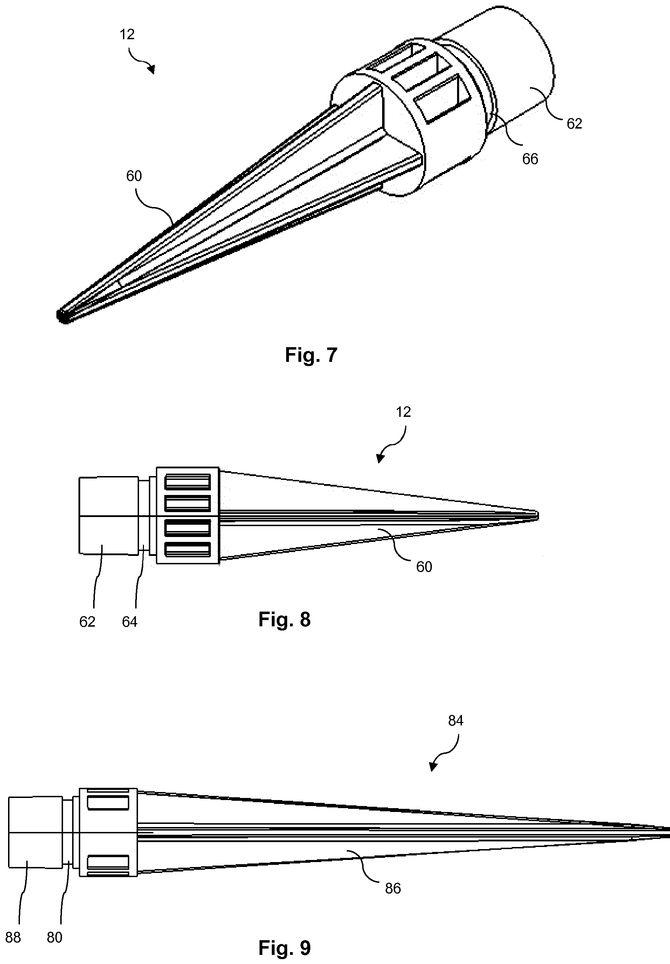

The pet securing device 1 comprises a releasable strap 28 for securing a lead in place in the holder 10. An example of a releasable strap 28 is shown in figure 7. A first end of the strap 28 comprises an over-moulded catch 30, which is receivable in a strap retaining means 32 on the front wall 16 of the holder 10. The strap retaining means 32 comprises an aperture 34 for receiving the catch 30. The catch 30 comprises resilient members 36 that are biased apart from each other, so that when the catch 30 is inserted through the aperture 34 in the strap retaining means 32, the resilient members 36 engage the walls of the strap retaining means 32 to retain the catch 30 in the aperture 34. A user may press the resilient members 36 together in order to release the catch 30 from the strap retaining means 32.

The strap 28 is formed of a flexible material, and in use may extend from the strap retaining means 32, over the top 26 of the holder 10, to a strap adjustment retainer 38 that is provided on the rear wall 18 of the holder 10. The strap 28 may extend through a space in the retractable pet lead, for example between the handle and the housing of a retractable pet lead, in order to secure the pet lead in the holder 10.

Towards the second end of the strap 28 there is provided a plurality of sloping projections 40 along a length of the strap 28, forming a ratchet. The strap adjustment retainer 34, shown in figures 3 to 5, comprises an aperture 42, through which the second end of the strap 26 may be inserted, and an retaining portion 44 having projections for engaging one or more of the projections 40 on the strap, to hold the second end of the strap 28 in place. The projections on the engaging portion 44 engage the projections 40 on the strap 28 such that the strap 28 may be further pulled through the aperture 42 in a first direction, towards the base 24 of the holder, but may not be pulled through the aperture 42 in a second direction, opposite to the first direction, without disengaging the retaining portion 44 from the projections 40 on the strap. The strap 28 may be tightened by pulling the second end of the strap 28 further through the aperture 42.

The top end 26 of each of the front and rear walls 16, 18 comprises a cut-out portion 48, 50 positioned above and extending towards the strap retaining means 32 on the front wall 16 and the strap adjustment retainer 34 on the rear wall 18. The cut-out portions 48, 50 allow the strap 26 to be tightened when a smaller retractable lead is inserted in the holder 10, wherein the space between the handle and the housing of the retractable lead does not project above the top 26 of the holder 10.

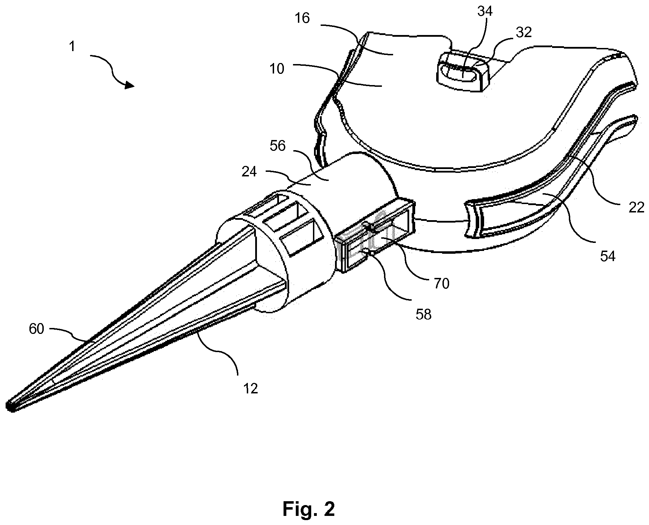

A first slot 52 is provided in the left side wall 20 of the holder 10 and a second slot 54 is provided in the right side wall 22 of the holder 10, shown in figures 2, 4 and 5. The first slot 52 extends from the top of the left side wall 20 towards the base 24 of the holder 10. The second slot 56 extends from the top of the right side wall 22 towards the base 24 of the holder 10. In use, the tape of a retractable lead may extend through the first slot 52 or the second slot 54. The feature of each of the slots extending down the side wall towards the base 24, and there being provided a slot on the left side wall and the right side wall provides the holder with the capability of holding a variety of different types of retractable leads, wherein the housing has different shapes, and the tape extends from different regions of the housing.

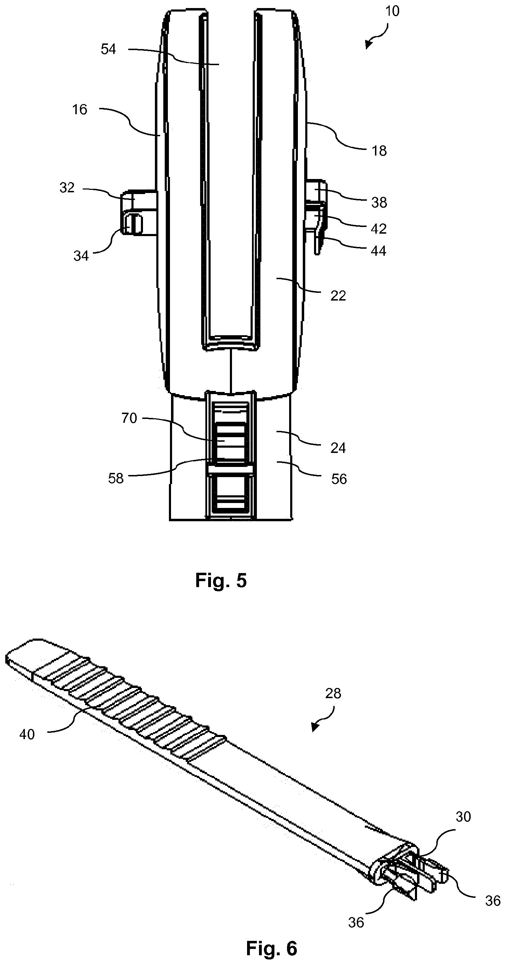

The holder 10 comprises a connection portion 56, provided at the base 24 of the holder 10, for connecting the holder 10 to the post 12. The holder 10 also comprises a securing clip 58, for releasably securing the holder 10 to the post 12, shown in figures 3 and 5. The connection portion 56 is substantially cylindrical.

The post 12 is a stake for inserting into the ground. The post 12 comprises a spike 60, which insertable into the ground, and a head 62, which is provided above the ground in use. The connection portion 56 is hollow and fits over the head 62 of the post 12.

The securing clip 56 comprises a flange 64 that is receivable into an annular groove 66 in the head 62 of the post 12, to secure the holder 10 to the post 12. The holder 10, when attached to the post 12, is rotatable relative to the post 12, about the axis of the post 12. As the holder 10 rotates relative to the post 12, the flange 64 of the securing clip 56 moves around the annular groove 66 in the post 12, thereby securing the holder 10 to the post 12.

The securing clip 56 comprises an actuator 70, which, when pressed, removes the flange 64 from the annular groove 66, so that the user may detach the holder 10 from the post 12.

The holder 10 is separable from the post 11. A cap 72 and a withdrawal handle 74 may also be releasably attachable to the post 12. A kit of parts therefore comprises the holder 10, the post 12, the cap 72 and the handle 74.

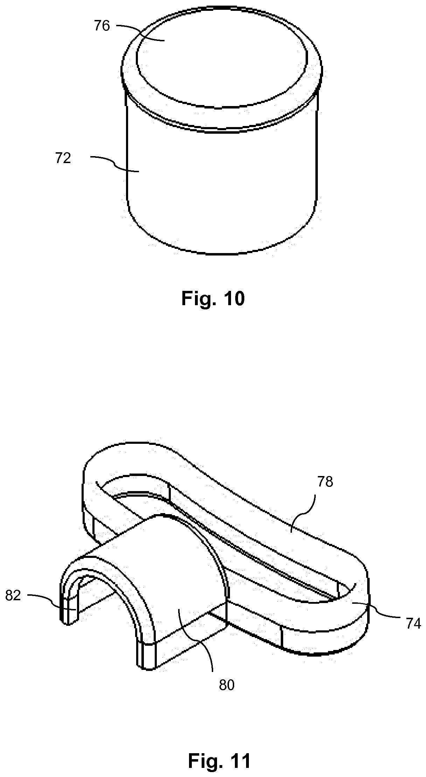

The cap 72, shown in figure 10, is substantially cylindrical and hollow, and comprises a closed end 76. The cap 72 fits onto the head 62 of the post 12. The closed end 76 of the cap 72 provides a surface to which force can be applied to insert the spike 60 into the ground. When the spike 60 is inserted into the ground, the cap 72 may be removed from the head 62, and the holder 10 may be attached to the post 12.

The withdrawal handle 74, shown in figure 12, comprises a gripping portion 78, shaped to be gripped by a user, and an attachment portion 80 for connecting to the head 62 of the post 12. The attachment portion 80 has a substantially semi-cylindrical cross section, with a lip 82 that is receivable in the annular groove 66 in the head 62 of the post 12. The user may attach the withdrawal handle 74 to the head 62 of the post 12 by fitting the lip 82 into the annular groove 66 in the head 62, and then may grip the gripping portion 78 and pull the post 12 from the ground.

The kit of parts comprises a second post 84, shown in figure 9, wherein the length of the spike 86 is longer than the length of the spike 60 shown in figure 8. The post 84 with the longer length spike 86 may be suitable for soft ground, and the post 12 with the shorter length spike 60 may be suitable for firmer ground. The second post 84 comprises a head 88 with an annular groove 90, that correspond to the head 62 and the annular groove 66 of the first post 12.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

## Claims

1. A pet securing device (1) comprising a holder (10) for releasably retaining a pet lead and a post (12) for insertion into the ground, wherein the holder (10) is rotatable relative to the post (12),
wherein the holder (10) comprises an opening (14) for receiving a housing of a retractable pet lead, and wherein the holder (10) comprises a curved left side wall (20) and a curved right side wall (22),
**characterised in that** the holder (10) comprises a first slot (52) provided in the left side wall (20) for a tape of a retractable pet lead to extend therethrough from the interior of the holder (10), the first slot (52) extending from a top end of the left side wall (20) towards a base (24) of the holder (10), and wherein the holder comprises a second slot (56) provided in the right side wall (22) for a tape of a retractable pet lead to extend therethrough from the interior of the holder, the second slot (56) extending from a top end of the right side wall (22) towards the base 24 of the holder (10),
wherein the length of the left side wall (20) is longer or shorter than the length of the right side wall (22).

2. The pet securing device (1) according to claim 1, wherein the holder (10) comprises a means for securing the pet lead in the holder.

3. The pet securing device (1) according to claim 2, wherein the means for securing the pet lead in the holder is a strap (28) that is releasably attached at first and second ends to the holder (28), and wherein a middle portion of the strap (28) is adapted to extend through a space in the pet lead.

4. The pet securing device (1) according to claim 3, wherein the strap (28) comprises a catch (30) at the first end, that is receivable in an aperture (34) of a strap retaining means (32) on the holder (10), the catch comprising two resilient members (36) that are biased apart from each other to secure the catch in the aperture (34) of the strap retaining means (32).

5. The pet securing device (1) according to claim 3 or claim 4, wherein the strap (28) is adjustable.

6. The pet securing device (1) according to any of claims 3 to 5, wherein the holder (10) comprises a substantially planar front wall (16) and a substantially planar rear wall (18), wherein the front wall (16) and the rear wall (18) each comprises a cut-out portion (48, 50) for receiving the strap (28).

7. The pet securing device (1) according to any preceding claim, wherein the holder (10) comprises a connection portion (58) for connecting to a head (62) of the post (12).

8. The pet securing device (1) according to claim 7, wherein the holder (10) comprises a securing clip (56) for releasably securing the holder (10) to the post (12).

9. The pet securing device (1) according to claim 8, wherein the securing clip (58) comprises a flange (64) and the head (62) of the post (12) comprises an annular groove (66), wherein the flange (64) is receivable in the annular groove (66) to secure the holder (10) to the post (12), and wherein the flange (64) is movable around the annular groove (66) when the holder (10) is rotated relative to the post (12).

10. A kit of parts comprising a holder (10) for releasably retaining a pet lead and at least one post (12) for inserting into the ground, wherein the holder (10) is releasably attachable to the post (12), and wherein, the holder (10) is rotatable relative to the post (12) when attached to the post,
wherein the holder (10) comprises an opening (14) for receiving a housing of a retractable pet lead, and wherein the holder (10) comprises a curved left side wall (20) and a curved right side wall (22),
**characterised in that** the holder (10) comprises a first slot (52) provided in the left side wall (20) for a tape of a retractable pet lead to extend therethrough from the interior of the holder (10), the first slot (52) extending from a top of the left side wall (20) towards a base (24) of the holder (10), and wherein the holder (10) comprises a second slot (56) provided in the right sidewall (22) for a tape of a retractable pet lead to extend therethrough from the interior of the holder (10), the second slot (56) extending from a top of the right side wall (22) towards the base (24) of the holder (10),
wherein the length of the left side wall (20) is longer or shorter than the length of the right side wall (22).

11. The kit of parts according to claim 10, wherein the kit of part comprises a first post and a second post, each of the first post and the second post comprising a spike (60) for inserting into the ground, wherein the spike (60) of the second post is longer or shorter than the spike (60) of the first post.

12. The kit of parts according to claim 10 or claim 11, further comprising a cap (72) that is releasably attachable to the at least one post (12), the cap (72) comprising a planar surface for receiving a force to insert the post (12) into the ground.

13. The kit of parts according to any of claims 10 to 12, further comprising a handle (74) that is releasably attachable to the at least one post (12), the handle (74) comprising a gripping portion for pulling the post (12) from the ground.

## Patentansprüche

1. Haustiersicherungsvorrichtung (1), eine Halterung (10) zum lösbaren Zurückhalten einer Haustierleine und einen Pfahl (12) zum Einsetzen in den Boden umfassend, wobei die Halterung (10) in Bezug zum Pfahl (12) drehbar ist,
wobei die Halterung (10) eine Öffnung (14) zur Aufnahme eines Gehäuses einer einziehbaren Haustierleine umfasst und wobei die Halterung (10) eine gekrümmte linke Seitenwand (20) und eine gekrümmte rechte Seitenwand (22) umfasst,
**dadurch gekennzeichnet, dass** die Halterung (10) einen ersten Schlitz (52) umfasst, der in der linken Seitenwand (20) vorgesehen ist, sodass sich das Band einer einziehbaren Haustierleine vom Inneren der Halterung (10) dort hindurch erstrecken kann, wobei sich der erste Schlitz (52) von einem oberen Ende der linken Seitenwand (20) zur Basis (24) der Halterung (10) erstreckt und wobei die Halterung einen zweiten Schlitz (56) umfasst, der in der rechten Seitenwand (22) vorgesehen ist, sodass sich das Band einer einziehbaren Haustierleine vom Inneren der Halterung dort hindurch erstrecken kann, wobei sich der zweite Schlitz (56) von einem oberen Ende der rechten Seitenwand (22) zur Basis (24) der Halterung (10) erstreckt,
wobei die Länge der linken Seitenwand (20) größer oder kleiner als die Länge der rechten Seitenwand (22) ist.

2. Haustiersicherungsvorrichtung (1) nach Anspruch 1, wobei die Halterung (10) eine Einrichtung zum Sichern der Haustierleine in der Halterung umfasst.

3. Haustiersicherungsvorrichtung (1) nach Anspruch 2, wobei die Einrichtung zum Sichern der Haustierleine in der Halterung ein Gurt (28) ist, der mit dem ersten und zweiten Ende lösbar an der Halterung (28) befestigt ist, und wobei ein mittlerer Abschnitt des Gurts (28) dazu eingerichtet ist, sich durch einen Raum in der Haustierleine zu erstrecken.

4. Haustiersicherungsvorrichtung (1) nach Anspruch 3, wobei der Gurt (28) einen Haken (30) am ersten Ende umfasst, der in einer Öffnung (34) einer Gurthalteeinrichtung (32) an der Halterung (10) aufnehmbar ist, wobei der Haken zwei elastische Elemente (36) umfasst, die voneinander weg vorgespannt sind, um den Haken in der Öffnung (34) der Gurthalteeinrichtung (32) zu sichern.

5. Haustiersicherungsvorrichtung (1) nach Anspruch 3 oder Anspruch 4, wobei der Gurt (28) einstellbar ist.

6. Haustiersicherungsvorrichtung (1) nach einem der Ansprüche 3 bis 5, wobei die Halterung (10) eine im Wesentlichen ebene Stirnwand (16) und eine im Wesentlichen ebene Rückwand (18) umfasst, wobei die Stirnwand (16) und die Rückwand (18) jeweils einen ausgeschnittenen Abschnitt (48, 50) zur Aufnahme des Gurts (28) umfassen.

7. Haustiersicherungsvorrichtung (1) nach einem der vorstehenden Ansprüche, wobei die Halterung (10) einen Verbindungsabschnitt (58) zur Verbindung mit einem Kopf (62) des Pfahls (12) umfasst.

8. Haustiersicherungsvorrichtung (1) nach Anspruch 7, wobei die Halterung (10) einen Sicherungsclip (56) zum lösbaren Sichern der Halterung (10) am Pfahl (12) umfasst.

9. Haustiersicherungsvorrichtung (1) nach Anspruch 8, wobei der Sicherungsclip (58) einen Flansch (64) umfasst und der Kopf (62) des Pfahls (12) eine ringförmige Nut (66) umfasst, wobei der Flansch (64) in der ringförmigen Nut (66) aufnehmbar ist, um die Halterung (10) am Pfahl (12) zu sichern, und wobei der Flansch (64) um die ringförmige Nut (66) beweglich ist, wenn die Halterung (10) in Bezug zum Pfahl (12) gedreht wird.

10. Teilesatz, eine Halterung (10) zum lösbaren Zurückhalten einer Haustierleine und mindestens einen Pfahl (12) zum Einsetzen in den Boden umfassend, wobei die Halterung (10) lösbar am Pfahl (12) befestigbar ist und wobei die Halterung (10) in Bezug zum Pfahl (12) drehbar ist, wenn sie am Pfahl befestigt ist,
wobei die Halterung (10) eine Öffnung (14) zur Aufnahme eines Gehäuses einer einziehbaren Haustierleine umfasst und wobei die Halterung (10) eine gekrümmte linke Seitenwand (20) und eine gekrümmte rechte Seitenwand (22) umfasst,
**dadurch gekennzeichnet, dass** die Halterung (10) einen ersten Schlitz (52) umfasst, der in der linken Seitenwand (20) vorgesehen ist, sodass sich das Band einer einziehbaren Haustierleine vom Inneren der Halterung (10) dort hindurch erstrecken kann, wobei sich der erste Schlitz (52) von einer Oberseite der linken Seitenwand (20) zur Basis (24) der Halterung (10) erstreckt und wobei die Halterung (10) einen zweiten Schlitz (56) umfasst, der in der rechten Seitenwand (22) vorgesehen ist, sodass sich das Band einer einziehbaren Haustierleine vom Inneren der Halterung (10) dort hindurch erstrecken kann, wobei sich der zweite Schlitz (56) von einer Oberseite der rechten Seitenwand (22) zur Basis (24) der Halterung (10) erstreckt,
wobei die Länge der linken Seitenwand (20) größer oder kleiner als die Länge der rechten Seitenwand (22) ist.

11. Teilesatz nach Anspruch 10, wobei der Teilesatz einen ersten Pfahl und einen zweiten Pfahl umfasst, wobei der erste und zweite Pfahl jeweils einen Dorn (60) zum Einsetzen in den Boden umfassen, wobei der Dorn (60) des zweiten Pfahls länger oder kürzer ist als der Dorn (60) des ersten Pfahls.

12. Teilesatz nach Anspruch 10 oder Anspruch 11, ferner eine Kappe (72) umfassend, die lösbar an dem mindestens einen Pfahl (12) befestigbar ist, wobei die Kappe (72) eine ebene Fläche zur Aufnahme einer Kraft, um den Pfahl (12) in den Boden einzusetzen, umfasst.

13. Teilesatz nach einem der Ansprüche 10 bis 12, ferner einen Griff (74) umfassend, der lösbar an dem mindestens einen Pfahl (12) befestigbar ist, wobei der Griff (74) einen Greifabschnitt, um den Pfahl (12) aus dem Boden zu ziehen, umfasst.

## Revendications

1. Dispositif d'attache (1) d'animaux domestiques comprenant un dispositif de fixation (10) destiné à retenir de manière libérable une laisse pour animal domestique et un poteau (12) destiné à être inséré dans le sol, le dispositif de fixation (10) pouvant tourner par rapport au poteau (12),
le dispositif de fixation (10) comprenant une ouverture (14) pour recevoir un boîtier d'une laisse rétractable pour animal domestique, et le dispositif de fixation (10) comprenant une paroi latérale gauche incurvée (20) et une paroi latérale droite incurvée (22),
**caractérisé en ce que** le dispositif de fixation (10) comprend une première fente (52) pratiquée dans la paroi latérale gauche (20) pour qu'une bande d'une laisse rétractable pour animal domestique s'étende au travers depuis l'intérieur du dispositif de fixation (10), la première fente (52) s'étendant depuis une extrémité supérieure de la paroi latérale gauche (20) vers une base (24) du dispositif de fixation (10), et le dispositif de fixation comprenant une seconde fente (56) pratiquée dans la paroi latérale droite (22) pour qu'une bande d'une laisse rétractable pour animal domestique s'étende au travers depuis l'intérieur du dispositif de fixation, la seconde fente (56) s'étendant depuis une extrémité supérieure de la paroi latérale droite (22) vers la base (24) du dispositif de fixation (10),
la longueur de la paroi latérale gauche (20) étant plus longue ou plus courte que la longueur de la paroi latérale droite (22).

2. Dispositif d'attache (1) d'animaux domestiques selon la revendication 1, le dispositif de fixation (10) comprenant un moyen pour fixer la laisse pour animal domestique dans le dispositif de fixation.

3. Dispositif d'attache (1) d'animaux domestiques selon la revendication 2, le moyen pour fixer la laisse pour animal domestique dans le dispositif de fixation étant une sangle (28) qui est attachée de manière amovible au niveau de première et seconde extrémités au dispositif de fixation (28), et une partie centrale de la sangle (28) étant conçue pour s'étendre à travers un espace dans la laisse pour animal domestique.

4. Dispositif d'attache (1) d'animaux domestiques selon la revendication 3, la sangle (28) comprenant un loquet (30) au niveau de la première extrémité, qui peut être reçu dans une ouverture (34) d'un moyen de retenue de sangle (32) sur le dispositif de fixation (10), le loquet comprenant deux éléments élastiques (36) qui sont sollicités à l'opposé l'un de l'autre pour fixer le loquet dans l'ouverture (34) du moyen de retenue de sangle (32).

5. Dispositif d'attache (1) d'animaux domestiques selon la revendication 3 ou la revendication 4, la sangle (28) étant réglable.

6. Dispositif d'attache (1) d'animaux domestiques selon l'une quelconque des revendications 3 à 5, le dispositif de fixation (10) comprenant une paroi avant (16) sensiblement plane et une paroi arrière (18) sensiblement plane, la paroi avant (16) et la paroi arrière (18) comprenant chacune une partie découpée (48, 50) pour recevoir la sangle (28).

7. Dispositif d'attache (1) d'animaux domestiques selon l'une quelconque des revendications précédentes, le dispositif de fixation (10) comprenant une partie de liaison (58) destinée à être reliée à une tête (62) du poteau (12).

8. Dispositif d'attache (1) d'animaux domestiques selon la revendication 7, le dispositif de fixation (10) comprenant une attache de fixation (56) pour fixer de manière amovible le dispositif de fixation (10) au poteau (12) .

9. Dispositif d'attache (1) d'animaux domestiques selon la revendication 8, l'attache de fixation (58) comprenant une bride (64) et la tête (62) du poteau (12) comprenant une rainure annulaire (66), la bride (64) pouvant être reçue dans la rainure annulaire (66) pour fixer le dispositif de fixation (10) au poteau (12), et la bride (64) étant mobile autour de la rainure annulaire (66) lorsque le dispositif de fixation (10) est tourné par rapport au poteau (12).

10. Kit de pièces comprenant un dispositif de fixation (10) destiné à retenir de manière amovible une laisse pour animal domestique et au moins un poteau (12) destiné à être inséré dans le sol, le dispositif de fixation (10) pouvant être attaché de manière amovible au poteau (12), et le dispositif de fixation (10) pouvant tourner par rapport au poteau (12) lorsqu'il est attaché au poteau,
le dispositif de fixation (10) comprenant une ouverture (14) pour recevoir un boîtier d'une laisse rétractable pour animal domestique, et le dispositif de fixation (10) comprenant une paroi latérale gauche incurvée (20) et une paroi latérale droite incurvée (22),
**caractérisé en ce que** le dispositif de fixation (10) comprend une première fente (52) pratiquée dans la paroi latérale gauche (20) pour qu'une bande d'une laisse rétractable pour animal domestique s'étende au travers depuis l'intérieur du dispositif de fixation (10), la première fente (52) s'étendant depuis une partie supérieure de la paroi latérale gauche (20) vers une base (24) du dispositif de fixation (10), et le dispositif de fixation (10) comprenant une seconde fente (56) pratiquée dans la paroi latérale droite (22) pour qu'une bande d'une laisse rétractable pour animal domestique s'étende au travers depuis l'intérieur du dispositif de fixation (10), la seconde fente (56) s'étendant depuis une partie supérieure de la paroi latérale droite (22) vers la base (24) du dispositif de fixation (10),
la longueur de la paroi latérale gauche (20) étant plus longue ou plus courte que la longueur de la paroi latérale droite (22).

11. Kit de pièces selon la revendication 10, le kit de pièces comprenant un premier poteau et un second poteau, chacun du premier poteau et du second poteau comprenant une pointe (60) destinée à être insérée dans le sol, la pointe (60) du second poteau étant plus longue ou plus courte que la pointe (60) du premier poteau.

12. Kit de pièces selon la revendication 10 ou la revendication 11, comprenant en outre un capuchon (72) qui peut être attaché de manière amovible à l'au moins un poteau (12), le capuchon (72) comprenant une surface plane pour recevoir une force pour insérer le poteau (12) dans le sol.

13. Kit de pièces selon l'une quelconque des revendications 10 à 12, comprenant en outre une poignée (74) qui peut être attachée de manière amovible à l'au moins un poteau (12), la poignée (74) comprenant une partie de préhension pour tirer le poteau (12) du sol.
